**Europäisches Patentamt**

**European Patent Office**

**Office européen des brevets**

(19)

(11) Numéro de publication: **0 252 443**
**B1**

(12) # FASCICULE DE BREVET EUROPEEN

(45) Date de publication du fascicule du brevet:
07.02.90

(51) Int. Cl.⁴: **F16B 2/14**

(21) Numéro de dépôt: **87109545.1**

(22) Date de dépôt: **02.07.87**

(54) Dispositif de fixation sur profilé de retenue.

(30) Priorité: **07.07.86 FR 8609848**
**01.10.86 FR 8613684**

(43) Date de publication de la demande:
**13.01.88 Bulletin 88/2**

(45) Mention de la délivrance du brevet:
**07.02.90 Bulletin 90/6**

(84) Etats contractants désignés:
**BE CH DE FR GB IT LI NL**

(56) Documents cités:
**EP-A- 0 023 024**
**DE-A- 2 623 814**
**FR-A- 1 311 393**
**FR-A- 2 297 020**

(73) Titulaire: **MARS-ACTEL Société Anonyme dite:,**
**25, Avenue Jean-Jaurès, F-08330 Vrigne-aux-Bois(FR)**

(72) Inventeur: **Molnar, Geza, 11 rue de Grenet Aiglemont,**
**F-08090 Charleville Mezières(FR)**
Inventeur: **Yapoudjian, Claude, 62 avenue Gabriel Péri,**
**F-91420 Morangis(FR)**

(74) Mandataire: **Weinmiller, Jürgen et al,**
**Lennéstrasse 9 Postfach 24, D-8133 Feldafing(DE)**

ACTORUM AG

# Description

La présente invention concerne la fixation d'organes divers sur un profilé dont la section est conformée pour faciliter cette fixation. Un tel profilé peut être dit "de retenue". Il se présente par exemple sous la forme d'un montant vertical en alliage d'aluminium extrudé tel qu'on en rencontre notamment dans les centraux téléphoniques, mais aussi dans des tableaux d'équipement électrique, des agencements de magasins, ou de la menuiserie pour bâtiment. Quoique le dispositif selon l'invention puisse être utilisé pour porter des organes de natures très diverses, il doit être compris qu'il est particulièrement adapte à la fixation rapide de charges moderées tels que des paquets de fils ou des boîtiers de connexion dans un central téléphonique.

De manière plus précise le dispositif selon l'invention est destiné à coopérer avec un profilé de retenue qui s'étend selon une direction longitudinale avec une section transversale constante.

Le plan de cette section contient une direction latérale droite-gauche et une direction de profondeur avant-arrière. Le profilé présente une ouverture centrale entre deux lèvres de retenue latérales gauche et droite et forme une cavité en arrière de ces lèvres, c'est-à-dire qu'il ménage un espace derrière chacune de ces lèvres et cette ouverture.

Un premier dispositif connu comporte par exemple une barrette de retenue disposée dans la cavité du profile, et une barrette d'appui située en avant des lèvres. Pour le montage, la barrette de retenue est d'abord orientée selon la direction longitudinale du profile, ce qui permet de l'introduire dans la cavité en passant par l'ouverture de celui-ci. Elle tourne ensuite autour d'un axe avant arrière de manière que ses deux extrémités se déplacent à la fois longitudinalement et latéralement et viennent chacune derrière l'une des deux lèvres de retenue.

La barrette d'appui s'applique sur les faces avant de ces mêmes lèvres. Les deux barrettes sont réunies par une vis centrale dont le vissage enserre chacune des lèvres entre les deux barrettes et crée des forces d'appui permanente de ces barrettes contre ces lèvres. Ces forces sont dirigées vers l'avant et l'arrière de manière équilibrée et réalisent le blocage du dispositif par serrage des deux lèvres.

La barrette d'appui porte les moyens de support de l'organe à fixer.

Ce dispositif de fixation connu est constitué de trois pièces à savoir les deux barrettes auxquelles la force de serrage de la vis applique des contraintes de flexion relativement importantes et la vis dont les filets supportent eux aussi des contraintes, notamment de cisaillement, relativement importantes. C'est pourquoi ce trois, pièces sont généralement réalisées en métal.

Par ailleurs le document EP-A 0 023 024 (NOSAG) décrit un deuxième dispositif connu permettant une fixation longitudinalement réglable d'un organe sur des éléments de retenue longitudinaux. Ces derniers sont constitués non pas par les deux lèvres d'un profilé ouvert rigide mais par une pairs de fils d'acier flexibles. Ce dispositif comporte un cadre en C (Halter 14) entourant la paire de fils en laissant une ouverture centrale.

Deux sabots coinceurs (Klemmstücke 15) présentent deux surfaces de glissement mutuel inclinées qui coopèrent pour repousser latéralement les fils contre les flancs du cadre et bloquer ainsi ce cadre contre ces fils. La fixation de l'organe à fixer se fait sur ce cadre. Des crémaillères sont formées sur les surfaces de glissement des sabots pour empêcher un décoincement intempestif.

Ce deuxième dispositif connu est lui aussi constitué de trois pièces, à savoir les deux sabots et le cadre et ce dernier subit des efforts de flexion importants et semble pour cela devoir être réalisé en métal.

La présente invention a pour but de réaliser une fixation rapide sur profilé de retenue à l'aide d'un dispositif comportant un nombre de pièces diminué. Elle a aussi pour but que les forces nécessaires au blocage de ce dispositif n'appliquent pratiquement à ces pièces que des contraintes de compression, et que la fabrication de ces pièces puisse se faire de manière simple et économique par moulage ou injection de matières plastiques.

Elle a pour objet un ensemble formé d'un profilé de retenue et d'un dispositif de fixation d'un organe, tel qu'un organe de connexion électrique, en un point longitudinalement réglable du profilé de retenue qui présente une section transversale constante s'étendant selon une diréction latérale droite-gauche, une ouverture centrale entre deux lèvres de retenue latérales gauche et droite et qui forme une cavité située en arrière de ces lèvres et de cette ouverture selon une direction de profondeur, avant-arrière,

– ce dispositif comportant deux sabots coinceurs gauche et droit correspondant aux lèvres de retenue gauche et droite,

– chacun de ces sabots s'étendant latéralement entre une face latérale externe et une face latérale interne, la face latérale externe présentant une surface de guidage propre à s'appliquer et à glisser longitudinalement contre le bord libre de la lèvre de retenue correspondante, la face latérale interne formant une surface de coincement présentant une profondeur selon ladite direction de profondeur et une longueur qui est perpendiculaire à cette profondeur et qui est inclinée par rapport à la direction longitudinale définie par ladite surface de guidage, d'un angle de coincement compris entre 3 et 20 degrés environ, la distance mesurée selon ladite direction latérale entre la surface de guidage et la surface de coincement de chaque sabot décroissant selon une direction longitudinale d'engagement de ce sabot, cette direction étant opposée à une direction de dégagement de ce sabot, les surfaces de coincement des deux sabots présentant le même angle de coincement pour s'appliquer l'une contre l'autre lorsque le dispositif est inséré dans ladite ouverture centrale avec appui des deux surfaces de guidage sur les bords libres des deux lèvres de retenue, les directions d'engagement des deux sabots étant opposées, afin que des forces longitudinales d'engagement opposées appliquées alors à ces deux sabots fassent glisser les deux surfaces de coincement l'une contre l'autre en coinçant chaque sabot entre le bord de la lèvre de retenue correspondante et la surface de coincement de l'autre sabot et que ce coincement assure le blocage du dispositif entre les bords des deux lèvres de retenue,

– chaque sabot présentant en outre un épaulement de retenue qui fait saillie à l'arrière de ladite surface de guidage pour s'appliquer contre la face arrière de la lèvre de retenue correspondante, et une surface d'appui arrière pour venir en appui vers l'arrière contre le profilé de retenue,

– l'un au moins des deux sabots comportant en outre à titre de partie intégrante des moyens de support par exemple une oreille percée d'un passage, pour porter ledit organe à fixer.

Un tel ensemble peut comporter outre le profilé deux pièces seulement, à savoir les deux sabots. Son blocage résulte de l'appui permanent des surfaces de guidage de ces sabots contre les bords des deux lèvres de retenue. Les forces d'appui qui y apparaissent alors sont dirigées selon les directions droite-gauche et gauche-droite.

Elles soumettent les sabots seulement à des contraintes de compression qui règnent dans le volume compris entre les surfaces de guidage et de coincement.

La présente invention a également pour objet un procédé utilisant cet ensemble. Selon ce procédé, on se procure deux dits sabots tels que la largeur maximale d'une partie arrière de chacun soit inférieure à la largeur de ladite ouverture du profile de retenue auquel il faut se fixer, cette partie arrière comportant ladite surface de guidage, ledit épaulement de retenue et au moins une partie correspondante de ladite surface de coincement,

– on oriente chaque sabot sensiblement selon lesdites directions longitudinale latérale et de profondeur du profilé de retenue, en opposant les directions d'engagement des deux sabots,

– on introduit ladite partie arrière de chacun de ces sabots dans ladite ouverture et ladite cavité du profilé, chaque sabot étant décalé longitudinalement selon ladite direction de dégagement par rapport à l'autre sabot d'une distance suffisante pour que la présence de cet autre sabot ne gêne pas cette introduction,

– on amène les surfaces de guidage de chaque sabot en contact avec le bord de la lèvre de retenue correspondante par déplacement latéral de ce sabot vers l'intérieur et on amène les surfaces de coincement des deux sabots en contact mutuel par déplacement de l'un au moins d'entre eux selon ladite direction d'engagement,

– on pousse sur chacun de ces deux sabots selon ladite direction d'engagement de manière que le glissement de sa surface de coincement contre celle de l'autre sabot fasse apparaître une force latérale d'appui de la surface de glissement du sabot poussé contre le bord de la lèvre de retenue correspondante, et on continue cette poussée jusqu'à ce que cette force d'appui latérale soit suffisante pour assurer par frottement le blocage longitudinal du dispositif.

De préférence ledit angle de coincement est compris entre 5 et 12 degrés, lesdits sabots étant constitués d'un polymère organique présentant à la fois une bonne résistance mécanique et une certaine souplesse, comme, par exemple, un polyamide.

De préférence, encore ladite surface de guidage, ledit épaulement de retenue et une dite surface d'appui arrière sont constituées par le fond, le flanc arrière et le flanc avant, respectivement, d'une rainure de glissement s'étendant longitudinalement dans la face latérale externe de chaque sabot pour recevoir la lèvre de retenue correspondante. Une telle rainure de guidage s'étendant continuement sur toute la longueur du sabot est d'une réalisation particulièrement simple. Sa largeur mesurée selon ladite direction de profondeur, est choisie à l'epaisseur des lèvres de retenues, égale à un très léger jeu près. Mais la surface de guidage et l'épaulement de retenue pourraient ne pas être continus, et une dite surface d'appui pourrait être constituée par une face formée sur le sabot à l'arrière de l'épaulement de retenue, pour prendre appui et glisser contre le fond de la cavité du profilé de retenue.

De préférence encore au moins un premier dit sabot comporte au moins une saillie d'arrêt, cette dernière formant saillie sur ladite surface de coincement, étant élastiquement rétractable, et présentant une face sommitale de glissement propre à venir en contact avec la surface de coincement du second sabot et à glisser longitudinalement contre cette surface tout en recevant une force suffisante pour assurer la rétractation de la saillie et permettre ainsi le contact et le glissement mutuel des deux surfaces de coincement, le second sabot présentant au moins une face d'arrêt s'écartant en retrait de sa surface de coincement et regardant vers ladite direction de dégagement de ce second sabot pour recevoir une face de cette saillie d'arrêt du premier sabot lorsque le blocage du dispositif dans le profilé de retenue est obtenu, afin que cette saillie et cette face d'arrêt coopèrent alors pour empêcher un dégagement par déplacement longitudinal d'un sabot.

De préférence encore chacun des deux dits sabots comporte au moins une dite saillie d'arrêt et au moins une dite face d'arrêt.

De préférence, encore, selon un premier mode de réalisation de l'invention, ladite surface de coincement de chaque dit sabot présente des stries s'étendant selon ladite direction de profondeur et se succédant selon la longueur de cette surface, ces stries étant constituées d'un matériau élastique et formant, par rapport à ladite surface de coincement, d'une part des saillies qui constituent lesdites saillies d'arrêt, d'autre part des creux qui sont situés entre ces saillies qui présentent des sections supérieures à celles de ces saillies, et dont les bords constituent lesdites faces d'arrêt. Le volume des saillies au dessus du plan de la surface de coincement est alors sensiblement plus petit que celui des creux en dessous de cette surface, et la hauteur de ces saillies au dessus de cette surface de même que leur largeur mesurée selon la longueur de cette surface sont choisies suffisamment petites, compte tenu de l'élasticité du matériau constitutif, un polyamide par exemple, pour que ces saillies puissent s'effacer de manière réversible, chacune au niveau de cette surface, lorsqu'une saillie d'un sabot vient en contact avec une saillie de l'autre.

De préférence, encore lesdites stries s'étendent sur une fraction minoritaire de la profondeur de la surface de coincement afin d'une part que l'efficacité dudit arrêt soit peu affectée par une petite rotation relative des deux surfaces de coincement en appui mutuel, d'autre part de limiter la force nécessaire au coincement avec arrêt des deux sabots. Mais elles se succèdent sur une fraction majoritaire de la longueur de cette surface afin que la force longitudinale d'engagement nécessaire à l'arrêt soit sensiblement la même pour des valeur légèrement différentes de la largeur de l'ouverture du profile de retenue.

De préférence encore, selon un deuxième mode de réalisation de l'invention, ladite saillie rétractable est constituée par un crochet d'arrêt. Ce crochet d'arrêt part d'une zone d'attache fixée à un dit sabot de coincement, qui est un sabot porte crochet, au voisinage d'une race d'engagement d'un corps de ce sabot, cette face étant celle qui est à l'avant de ce corps de sabot quand il se déplace selon sa dite direction d'engagement, ce crochet partant de cette zone dans une direction de départ telle qu'il dépasse en saillie de cette face d'engagement, ce crochet présentant, après cette zone d'attache, une zone de flexion élastique présentant la forme d'une lame dont la largeur est parallèle à ladite direction de profondeur et dont la longueur constitue une partie de celle du crochet, cette zone d'attache et au moins une partie initiale de cette zone de flexion étant situées en retrait de la dite surface de coincement du sabot porte crochet, ce crochet présentant aussi, après la zone d'attache, une zone d'incurvation l'éloignant de ladite face latérale externe et le retournant vers ladite direction de dégagement de ce sabot, ces zones de flexion et d'incurvation pouvant se confondre, ce crochet comportant, après ces zones de flexion et d'incurvation, une zone de contact comportant ladite face de glissement propre à glisser contre la surface de coincement de l'autre sabot coinceur et comportant aussi une face d'appui propre à venir en appui sur ladite face d'arrêt de cet autre sabot, cette face d'appui regardant dans la direction de dégagement du sabot porte crochet, la forme de repos de la zone de flexion de ce crochet plaçant lesdites faces de glissement et d'appui en saillie sur la surface de coincement de ce sabot, un espace étant prévu pour recevoir cette zone de contact en retrait sur cette surface de coincement lorsqu'un appui de la surface de coincement de l'autre sabot coinceur sur cette face de glissement fait fléchir cette zone de flexion, cette face de glissement étant disposée de manière que cet appui cesse après engagement mutuel des deux sabots pour que ladite face d'appui de ce crochet revienne naturellement en saillie sur la surface de coincement du sabot porte crochet et se mette en appui sur la face d'arrêt de l'autre sabot pour réaliser un arrêt, et de manière aussi qu'une pression de commande exercée sur la partie du crochet en saillie sur ladite face d'engagement du corps du sabot porte crochet fasse fléchir à nouveau ce crochet pour supprimer cet arrêt et permettre de dégager les deux sabots.

De préférence, chacun des deux dits sabots coinceurs porte un dit crochet d'arrêt et une face d'arrêt propre a coopérer avec la face d'appui du crochet de l'autre sabot.

A l'aide des figures schématiques ci-jointes on va décrire plus particulièrement ci-après, à titre d'exemple non limitatif, comment l'invention peut être mise en œuvre dans le cadre des dispositions mentionnées ci-dessus comme préférables. Il doit être compris que les éléments décrits et représentés peuvent, sans sortir du cadre de l'invention, être remplacés par d'autres éléments assurant les mêmes fonctions techniques. Lorsqu'un même élément est représenté sur plusieurs figures il y est désigné par le même signe de référence.

La figure 1 représente une vue en perspective d'un sabot d'un premier dispositif selon ledit premier mode de réalisation de l'invention, ce dispositif comportant deux sabots identiques.

La figure 2 représente une vue de dessus de ce dispositif en situation de blocage dans un profilé de retenue disposé verticalement et représente en coupe transversale.

La figure 3 représente une vue de devant de ce dispositif à une étape de sa mise en place dans le même profilé, un sabot supérieur étant représenté en outre en traits tiretés dans une position qu'il a antérieurement occupée.

La figure 4 représente une vue de devant de ce dispositif dans la situation de blocage de la figure 2.

La figure 5 représente une vue à échelle agrandie des stries de ce sabot, en coupe par un plan perpendiculaire à ces stries, une coupe des stries de l'autre sabot étant représenté en trait tireté.

La figure 6 représente une vue en perspective de ce dispositif dans la même situation, mais portant un collier pour le serrage de fils électriques dans un central téléphonique.

La figure 7 représente une vue en perspective d'un sabot d'un deuxième dispositif selon ledit deuxième mode de réalisation de l'invention.

La figure 8 représente une vue de face de ce dispositif dont les deux sabots sont engagés et coincés entre les lèvres d'un profilé de retenue.

La figure 9 représente une vue en perspective d'un sabot d'un troisième dispositif selon ledit deuxième mode de réalisation de l'invention.

La figure 10 représente une vue de face de ce deuxième dispositif dont les deux sabots sont engagés et coincés entre les lèvres du même profilé de retenue.

Les deux dispositifs décrits à titre d'exemple comportent respectivement les dispositions précédemment mentionnées comme préférables.

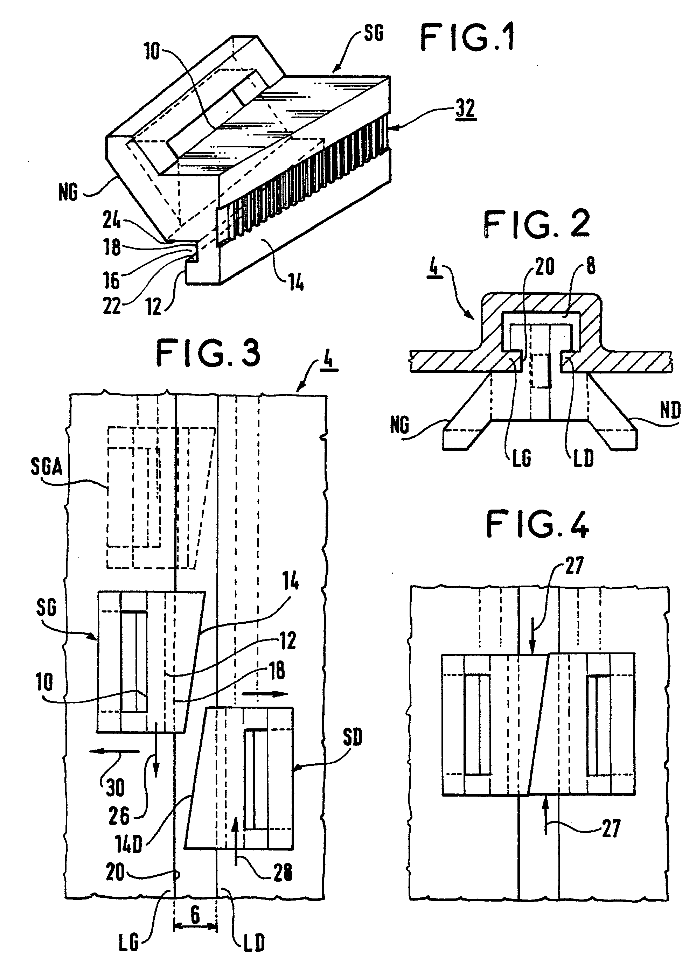

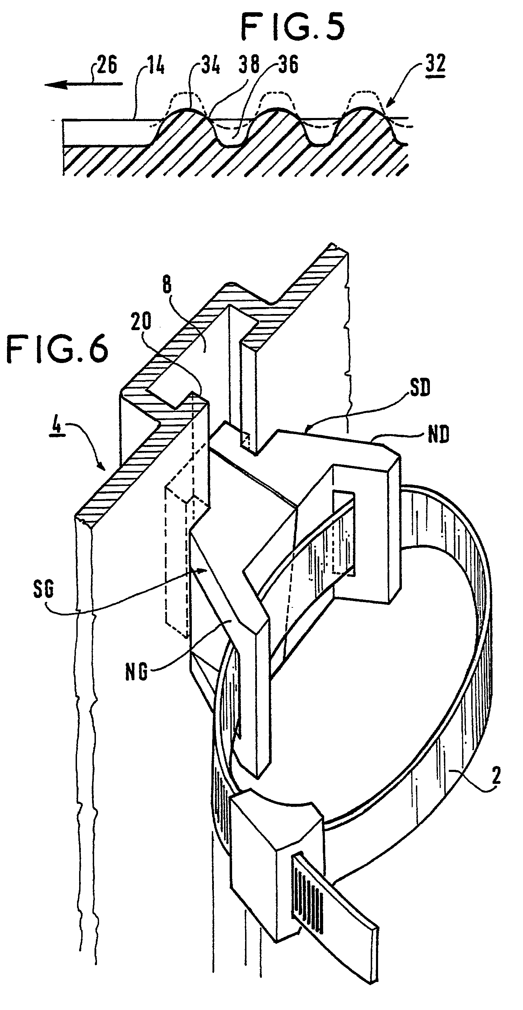

Le sabot SG représenté sur la figure 1 est destiné à fixer un organe tel que le collier de serrage 2 de la figure 6 à un profilé de retenue métallique vertical 4 représenté sur les figures 2, 3, 4 et 6.

Ce collier permettra de serrer et de fixer un faisceau de fils électriques non représentés. Il passe pour cela dans les trous de deux oreilles NG et ND fixées aux deux sabots identiques SG et SD et constituant les moyens de support précédemment mentionnés.

Il est clair que des moyens de support de formes diverses peuvent être utilisés. Il suffit qu'ils soient portés par l'un au moins des deux sabots et qu'ils soient adaptés à l'organe à fixer qui peut lui même être de natures très diverses.

Le profilé 4 présente une ouverture de passage centrale 6 entre deux lèvres de retenues LG et LD et forme une cavité 8 à l'arrière de ces lèvres.

Abstraction faite de l'oreille NG, le sabot gauche SG s'étend selon ladite direction latérale entre une face latérale externe 10, 12 qui forme plusieurs plans parallèles s'étendant selon lesdites directions longitudinale et de profondeur, et une face latérale interne 14.

La face latérale externe est creusée d'une rainure de glissement longitudinale 16 dont le fond 18 constitue la surface de guidage précédemment mentionnée. Cette surface est destinée à venir glisser et s'appuyer contre le bord 20 de la lèvre de retenue LG.

Le flanc arrière 22 de cette rainure constitue une face avant d'un épaulement de retenue 12 qui constitue une partie de la face latérale externe 10, 12 du sabot et qui est destiné à venir s'appuyer contre la face arrière de la lèvre LG. Le flanc avant 24 de cette rainure est destiné à venir s'appuyer contre la face avant de cette même lèvre et constitue la surface d'appui arrière précédemment mentionnée.

La face latérale interne 14 du sabot SG constitue sa surface de coincement inclinée précédemment mentionnée; celle du sabot SD étant représentée en 14D.

La direction d'engagement du sabot SG est représentée par la flèche 26 sur la figure 3, celle du sabot SD étant représentée par la flèche 28.

Lors de la réalisation d'une fixation, après avoir orienté convenablement notamment le sabot SG, on l'introduit dans l'ouverture 6 et la cavité 8 du profilé par un mouvement vers l'arrière pour aboutir à la position représentée en traits tiretés en SGA sur la figure 3. On le déplace latéralement vers l'extérieur selon la flèche 30 jusqu'à butée de la surface de guidage 18 contre le bord 20 de la lèvre LG. La surface de coincement 14 de ce sabot est amenée au contact de celle 14D de l'autre sabot, précédemment positionné, par déplacement selon la direction d'engagement 26. Ce déplacement est continué en force jusqu'à blocage, les forces d'engagement appliquées étant représentées en 27 sur la figure 4.

Il existe uns possibilité de déblocage par déplacement accidentel d'un sabot selon sa direction de dégagement. Cette possibilité se réalise sous l'action d'une force de dégagement lorsque celle-ci dépasse un seuil. Il est préférable, que ce seuil ne soit pas trop élevé de manière à permettre un démontage non destructif du dispositif. Il doit être cependant suffisant pour éviter des déblocages accidentels. Pour cela on pourrait choisir un angle de coincement très petit, par exemple deux degrés, mais un tel choix obligerait notamment à donner aux sabots une longueur relativement élevée. C'est pourquoi il est apparu préférable aux inventeurs de prévoir les saillies et faces d'arrêt précédemment mentionnées, ces saillies et faces présentant la forme de stries 32 visibles notamment sur la figure 5. Ces stries forment par rapport à la surface de coincement 14 d'un sabot SG des saillies dont la face sommitale 34 est amenée lors de l'engagement des sabots en force à glisser contre la face sommitale des saillies homologues de l'autre sabot SD et à se retracter par deformation élastique. Les creux 36 entre deux saillies présentent une section supérieure à celles des saillies pour permettre cette rétraction des saillies sans diminution du volume du matériau. Leurs bords 3a du côté de l'engagement constituent les faces d'arrêt précédemment mentionnées. La largeur des saillies, mesurée au niveau de la surface de coincement selon la direction de la longueur de cette surface, est égale à la largeur des creux mesurée de même, et ces largeurs sont choisies aussi petites que possible par exemple 0,25 mm, compte tenu des possibilités de moulage, pour qu'une force de coincement sensiblement optimale puisse toujours être obtenue.

Le deuxième dispositif selon l'invention est destiné à fixer un organe au profilé de retenue 4. Ce dernier s'étend selon une direction longitudinale avec une section transversale constante. Cette section s'étend selon deux directions à savoir une direction latérale droite-gauche 31, 30 et une direction de profondeur arrière-avant DP. Le profilé présente une ouverture de passage centrale 6 entre deux lèvres de retenue latérales gauche LG et droite LD. Le dispositif comporte des surfaces d'appui arrière 24C pour venir en appui vers l'arrière contre des surfaces du profilé de retenue, et des moyens de support NGB, NDB pour porter ledit organe à fixer. Il comporte aussi des moyens de retenue et de blocage. Ces derniers comportent, comme dans le premier dispositif décrit précédemment, deux sabots coinceurs gauche SGB et droit SDB qui correspondent aux lèvres de retenue gauche LG et droite LD. Chacun de ces sabots s'étend latéralement entre une face latérale externe 10B, 12B et une face latérale interne 14B. Cette face latérale externe présente une surface de guidage 18B s'étendant longitudinalement et propre à venir en contact avec le bord libre de la lèvre de retenue correspondante LG pour permettre au sabot de glisser longitudinalement en appui contre ce bord. Cette face 10B, 12B porte aussi un épaulement de retenue 12B qui fait saillie latéralement vers l'extérieur à l'arrière de cette surface de guidage 18B pour venir s'appliquer contre la face arrière de cette lèvre de retenue LG.

La face latérale interne forme une surface de coincement 14B.

La saillie d'arrêt est constituée ici par un crochet d'arrêt 40GB. Ce dernier part d'une zone d'attache 42B fixée à un sabot de coincement SGB, qui peut être appelé sabot porte crochet. Cette zone est voisine d'une face d'engagement 44B d'un corps de ce sabot porte crochet, cette face étant celle qui est à l'avant de ce corps de sabot quand il se déplace selon sa dite direction d'engagement 26. Ce crochet part de cette zone dans une direction de départ telle qu'il dépasse en saillie de cette face d'engagement. Il présente, après cette zone d'attache, une zone de flexion élastique 46B présentant la forme d'une lame dont la largeur est parallèle à ladite direction de profondeur DP et dont la longueur constitue une partie de celle du crochet. Cette zone d'attache et au moins une partie initiale de cette zone de flexion sont situées en retrait de ladite surface de coincement 14B du sabot porte crochet SGB. Ce crochet présente la zone d'attache, une zone d'incurvation 46B aussi, après éloignant de ladite face latérale externe 10B, 12B et le retournant vers ladite direction de dégagement 28 de ce sabot. Dans l'exemple décrit ces zones de flexion et d'incurvation se confondent. Le crochet comporte, après ces zones de flexion et d'incurvation, une zone de contact 48B comportant ladite face de glissement 50B propre à glisser contre la surface de coincement de l'autre sabot coinceur SDB. Il comporte aussi une face d'appui 52B propre à venir en appui sur ladite face d'arrêt 54B de cet autre sabot. Cette face d'appui regarde dans la direction de dégagement 28 du sabot porte crochet. La forme de repos de la zone de flexion 46B de ce crochet place lesdites faces de glissement 50B et d'appui 52B en saillie sur la surface de coincement 14B de ce sabot. Un espace est prévu pour recevoir cette zone de contact en retrait sur cette surface de coincement lorsqu'un appui de la surface de coincement de l'autre sabot coinceur SDB sur cette face de glissement fait fléchir cette zone de flexion. Cette face de glissement 50B est disposée de manière que cet appui cesse après engagement mutuel des deux sabots 56B, SGD pour que ladite face d'appui 52B de ce crochet revienne naturellement en saillie sur la surface de coincement 14B du sabot porte crochet et se mette alors en appui sur la face d'arrêt 54B de l'autre sabot SDB pour réaliser l'arrêt.

Plus tard, et si nécessaire, une pression de commande exercée sur la partie 48B du crochet en saillie sur ladite face d'engagement 44B du corps du sabot ports crochet fera fléchir à nouveau ce crochet pour supprimer cet arrêt et permettre de dégager les deux sabots.

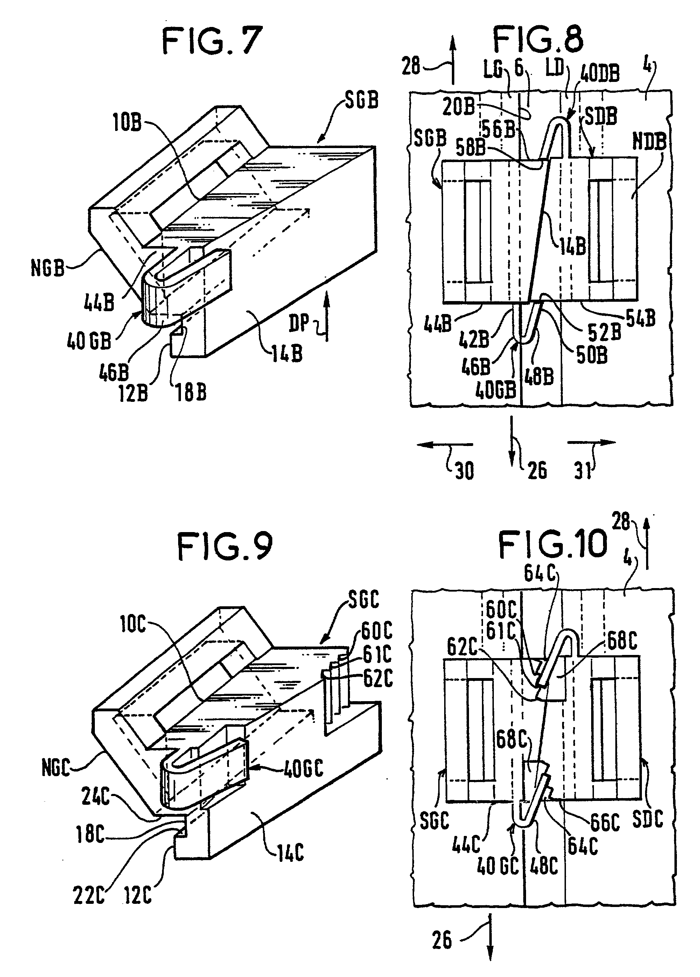

Dans ce deuxième dispositif, comme dans le troisième qui sera décrit plus loin, les deux sabots coinceurs sont identiques, l'un étant simplement retourné par rapport à l'autre, par rotation de 180 degrés autour d'un axe parallèle à ladite direction de profondeur DP (figure 7). Dans ces deux dispositifs, les crochets tels que 40GB sont entièrement constitués chacun par une lame partant perpendiculairement de la face d'engagement telle que 44B et se recourbant ensuite en épingle à cheveux. Dans le deuxième dispositif ladite face d'arrêt dudit autre sabot coinceur SDB est constituée par la face de dégagement 54B du corps de ce sabot.

Le troisième dispositif est analogue au deuxième et les mêmes signes de référence sont utilisés pour désigner les éléments correspondants, sauf que la lettre B incorporée dans les signes de référence du deuxième est remplacée par la lettre C pour le troisième.

Le troisième dispositif diffère du deuxième par le fait que ledit autre sabot SDC (voir figure 8 et 9) comporte plusieurs dites faces d'arrêt 60C, 61C, 62c qui se succèdent en crémaillère selon la direction d'engagement 28 de ce sabot. Ces surfaces sont formées au fond d'un évidemment 64C creusé dans la surface de coincement de ce sabot au voisinage de la face de dégagement 66C de ce sabot. Ledit espace prévu pour recevoir la zone de contact 48C du crochet 40GC du sabot porte crochet 56C est formé par un évidemment 68C creusé dans la surface de coincement 14C de ce sabot porte crochet au voisinage et jusqu'à ladite face d'engagement 44C du corps de ce sabot.

Ceci permet de réaliser un meilleur coincement des sabots dans les profilés de retenue dont les ouvertures de passage entre lèvres ont des largeurs un peu différentes de la largeur normale.

**Revendications**

1. Ensemble formé d'un profilé de retenue et d'un dispositif de fixation d'un organe (2), tel qu'un organe de connexion électrique, en un point longitudinalement réglable de profilé de retenue (4) qui présente une section transversale constante s'étendant selon une direction latérale droite-gauche, une ouverture centrale (6) entre deux lèvres de retenue latérales gauche (LG) et droite (LD) et qui forme une cavité (8) située en arrière de ces lèvres et de cette ouverture selon une direction de profondeur, avant-arrière,

– ce dispositif comportant deux sabots coinceurs gauche (SG) et droit (SD) correspondant aux lèvres de retenue gauche (LG) et droite (LD),

– chacun de ces sabots s'étendant latéralement entre une face latérale externe (10, 12) et une face latérale interne (14), la face latérale externe présentant une surface de guidage (18) propre à s'appliquer et à glisser longitudinalement contre le bord libre (20) de la lèvre de retenue correspondante (LG), la face latérale interne formant une surface de coincement (14) présentant une profondeur selon ladite direction de profondeur et une longueur qui est perpendiculaire à cette profondeur et qui est inclinée par rapport à la direction longitudinale définie par ladite surface de guidage, d'un angle de coincement compris entre 3 et 20 degrés environ, la distance mesurée selon ladite direction latérale entre la surface de guidage et la surface de coincement de chaque sabot décroissant selon une direction longitudinale d'engagement (26) de ce sabot (SG), cette direction étant opposée à une direction de dégagement de ce sabot, les surfaces de coincement des deux sabots (SG, SD) présentant le même angle de coincement pour s'appliquer l'une contre l'autre lorsque le dispositif est inséré dans ladite ouverture centrale avec appui des deux surfaces de guidage (18) sur les bords libres (20) des deux lèvres de retenue (LG, LD), les directions d'engagement (26, 28) des deux sabots étant opposées, afin que des forces longitudinales d'engagement opposées appliquées alors à ces deux sabots fassent glisser les deux surfaces de coincement l'une contre l'autre en coinçant chaque sabot (SG) entre le bord (20) de la lèvre de retenue correspondante (LG) et la surface de coincement (14D) de l'autre sabot et que ce coincement assure le blocage du dispositif entre les bords des deux lèvres de retenue (LG, LD),

– chaque sabot présentant en outre un épaulement de retenue (12) qui fait saillie à l'arrière de ladite surface de guidage (18) pour s'appliquer contre la face arrière de la lèvre de retenue correspondante (LG), et une surface d'appui arrière (24) pour venir en appui vers l'arrière contre le profilé de retenue,

– l'un au moins des deux sabots comportant en outre à titre de partie intégrante des moyens de support (NG, ND), par exemple une oreille percée d'un passage pour porter ledit organe à fixer.

2. Ensemble selon la revendication 1, caractérisé par le fait que ledit angle de coincement est compris entre 5 et 12 degrés, lesdits sabots étant constitués d'un polymère organique présentant à la fois une bonne résistance mécanique et une certaine souplesse, par exemple un polyamide.

3. Ensemble selon la revendication 1, caractérisé par le fait que ladite surface de guidage, ledit épaulement de retenue (12) et une dite surface d'appui arrière sont constituées par le fond (18), le flanc arrière (22) et le flanc avant (24), respectivement d'une rainure de glissement (16) s'étendant longitudinalement dans la face latérale externe (10, 12) de chaque sabot (SG) pour recevoir la lèvre de retenue correspondante (LG).

4. Ensemble selon la revendication 1, caractérisé par le fait qu'au moins un premier dit sabot (SG, SD) comporte au moins une saillie d'arrêt, cette dernière formant saillie sur ladite surface de coincement (14, 14D) étant élastiquement rétractable, et présentant une face sommitale (34) de glissement propre à venir en contact avec la surface de coincement (14D, 14) du second sabot (SD, SG) et à glisser longitudinalement contre cette surface tout en recevant une force suffisante pour assurer la rétractation de la saillie et permettre ainsi le contact et le glissement mutuel des deux surfaces de coincement, le second sabot (SD, SG) présentant au moins une face d'arrêt (38) s'écartant en retrait de sa surface de coincement (14) et regardant vers ladite direction de dégagement de ce second sabot pour recevoir une face de cette saillie d'arrêt du premier sabot lorsque le blocage du dispositif dans le profilé de retenue (4) est obtenu, afin que cette saillie et cette face d'arrêt coopèrent alors pour empêcher un déplacement longitudinal de dégagement d'un sabot.

5. Ensemble selon la revendication 4, caractérisé par le fait que chacun des deux dits sabots comporte au moins une dite saillie d'arrêt (34) et au moins une dite face d'arrêt (38).

6. Ensemble selon la revendication 5, caractérisé par le fait que ladite surface de coincement (14) de chaque dit sabot (SG) présente des stries (32) s'étendant selon ladite direction de profondeur et se succédant selon la longueur de cette surface, ces stries étant constituées d'un matériau élastique et formant, par rapport à ladite surface de coincement (14) d'une part des saillies (34) qui constituent lesdites saillies d'arrêt, d'autre part des creux (36) qui sont situés entre ces saillies, qui présentent des sections supérieures à celles de ces saillies, et dont les bords (38) constituent lesdites faces d'arrêt.

7. Ensemble selon la revendication 6, caractérisé par le fait que lesdites stries (32) occupent une fraction minoritaire de la profondeur de la surface de coincement (14) afin d'une part que l'efficacité dudit arrêt soit peu affecté par une petite rotation relative des deux surfaces de coincement en appui mutuel, d'autre part de limiter la force nécessaire au coincement avec arrêt des deux sabots (SG, SD), ces stries occupant une fraction majoritaire de la longueur de cette surface afin que la force longitudinale d'engagement nécessaire à l'arrêt soit sensiblement la même pour des valeurs légèrement différentes de la largeur de l'ouverture (6) du profilé de retenue (4).

8. Ensemble selon la revendication 4, caractérisé par le fait que ladite saillie rétractable est constituée par un crochet d'arrêt (40GB) partant d'une zone d'attache (42B) fixée à un dit sabot de coincement, qui est un sabot porte crochet (SGB), au voisinage d'une face d'engagement (44B) d'un corps de ce sabot porte crochet, cette face étant celle qui est à l'avant de ce corps de sabot quand il se déplace selon sa dite direction d'engagement (26), ce crochet partant de cette zone dans une direction de départ telle qu'il dépasse en saillie de cette face d'engagement, ce crochet présentant, après cette zone d'attache, une zone de flexion élastique (46B) présentant la forme d'une lame dont la largeur est parallèle à ladite direction de profondeur (DP) et dont la longueur constitue une partie de celle du crochet, cette zone d'attache et au moins une partie initiale de cette zone de flexion étant situées en retrait de ladite surface de coincement (14B) du sabot porte crochet (SGB), ce crochet présentant aussi, après la zone d'attache, une zone d'incurvation (46B) l'éloignant de ladite face latérale externe (10B, 12B) et le retournant vers ladite direction de dégagement (28) de ce sabot, ces zones de flexion et d'incurvation pouvant se confondre, ce crochet comportant, après ces zones de flexion et d'incurvation, une zone de contact (48B) comportant ladite face de glissement (50B) propre à glisser contre la surface de coincement de l'autre sabot coinceur (SDB) et comportant aussi une face d'appui (53B) propre à venir en appui sur ladite face d'arrêt (54B) de cet autre sabot, cette face d'appui regardant dans la direction de dégagement (28) du sabot porte crochet, la forme de repos de la zone de flexion (46B) de ce crochet plaçant lesdites faces de glissement (50B) et d'appui (53B) en saillie sur la surface de coincement (14B) de ce sabot, un espace étant prévu pour recevoir cette zone de contact en retrait sur cette surface de coincement lorsqu'un appui de la surface de coincement de l'autre sabot coinceur (SDB) sur cette face de glissement fait fléchir cette zone de flexion, cette face de glissement (50B) étant disposée de manière que cet appui cesse après engagement mutuel des deux sabots (56B, SGD) pour que ladite face d'appui (52B) de ce crochet revienne naturellement en saillie sur la surface de coincement (14B) du sabot porte crochet et se mette ainsi en appui sur la face d'arrêt (54B) de l'autre sabot (SDB) pour réaliser un arrêt, et de manière aussi qu'une pression de commande exercée sur la partie (48B) du crochet en saillie sur ladite face d'engagement (44B) du corps du sabot porte crochet fasse fléchir à nouveau ce crochet pour supprimer cet arrêt et permettre de dégager les deux sabots.

9. Ensemble selon la revendication 8 caractérisé par le fait que chacun des deux dits sabots coinceurs (SGB, SDB) porte un dit crochet d'arrêt (40GB, 40DB) et une face d'arrêt (56B, 54B) propre à coopérer avec la face d'appui (52B, 58B) du crochet de l'autre sabot.

10. Ensemble selon la revendication 9 caractérisé par le fait que ladite face d'arrêt dudit autre sabot coinceur (SDB) est constituée par la face de dégagement (54B) du corps de ce sabot.

11. Ensemble selon la revendication 8 caractérisé par le fait que ledit autre sabot (SDC) comporte plusieurs dites faces d'arrêt (60C, 61C, 62C) se succédant en crémaillère selon la direction d'engagement (28) de ce sabot et formées au fond d'un évidement (64C) creusé dans la surface de coincement de ce sabot au voisinage de la face de dégagement (66C) de ce sabot, ledit espace prévu pour recevoir la zone de contact (48C) du crochet (40GC) du sabot porte crochet (56C) étant formé par un évidement (68C) creusé dans la surface de coincement (14C) de ce sabot porte crochet au voisinage et jusqu'à ladite face d'engagement (44C) du corps de ce sabot.

12. Procédé de fixation sur un profilé de retenue (4) selon la revendication 1, ce procédé étant caractérisé par le fait qu'il comporte les étapes suivantes

– on se procure des sabots (SG, SD) selon la revendication 1, la largeur maximale d'une partie arrière de chaque dit sabot (SG) étant inférieure à la largeur de ladite ouverture (6) du profilé (4), cette partie arrière comportant ladite surface de guidage (18), ledit épaulement de retenue (12) et au moins une partie correspondante de ladite surface de coincement (14),

– on oriente chaque sabot sensiblement selon lesdites directions longitudinale, latérale et de profondeur du profilé de retenue en opposant les directions d'engagement des deux sabots,

– on introduit la partie arrière (12, 18) de chaque sabot (SG) dans ladite ouverture (6) et ladite cavité (8) du profilé, chaque sabot (SG) étant décalé longitudinalement selon ladite direction de dégagement (28) par rapport à l'autre (SD) d'une distance suffisante pour que la présence de cet autre sabot ne gêne pas cette introduction,

– on amène les surfaces de guidage de chaque sabot (SG) en contact avec le bord (20) de la lèvre de retenue (LG) correspondante par déplacement latéral (30) de ce sabot vers l'intérieur et on amène les surfaces de coincement (14, 14D) des deux sabots en contact mutuel par déplacement de l'un au moins d'entre eux selon ladite direction d'engagement (26),

– et on pousse chacun de ces deux sabots (SG, SD) selon ladite direction d'engagement (26, 28) de manière que le glissement de sa surface de coincement (14, 14') contre celle (14D, 14) de l'autre sabot (SD, SG) fasse apparaître une force latérale d'appui de la surface de glissement (18) du sabot poussé (SG) contre le bord (20) de la lèvre de retenue correspondante (LG), cette poussée étant continuée jusqu'à ce que cette force d'appui latérale soit suffisante pour assurer par frottement le blocage longitudinal du dispositif.

**Patentansprüche**

1. Montagesatz, bestehend aus einer Profilschiene und einer Vorrichtung zur Befestigung eines Bauteils (2), beispielsweise eines elektrischen Anschlußorgans, an einem in Längsrichtung variablen Punkt der Profilschiene (4), die einen konstanten, sich in einer Seitenrichtung von links nach rechts erstreckenden Querschnitt, und eine zentrale, zwischen zwei seitlichen Halterungslippen, einer linken (LG) und einer rechten (LD), befindliche Öffnung (6) besitzt, und die einen hinter den Lippen und der Öffnung befindlichen Hohlraum (8) mit einer sich von vorne nach hinten erstreckenden Tiefenrichtung aufweist, wobei die Vorrichtung zwei Klemmschuhe, einen linken (SG) und einen rechten (SD) besitzt, die der linken (LG) und der rechten (LD) Halterungslippe entsprechen,

– wobei jeder dieser Klemmschuhe sich jeweils seitlich zwischen einer äußeren Seitenfläche (10, 12) und einer inneren Seitenfläche (14) erstreckt, wobei die äußere Seitenfläche eine Führungsoberfläche (18) besitzt, welche sich gegen den freien Rand (20) der zugehörigen Halterungslippe (LG) anlegt und entlang derselben gleitet, während die innere Seitenfläche eine Klemmoberfläche (14) mit einer Tiefe in der Tiefenrichtung und einer sich senkrecht zur Tiefe erstreckenden Länge bildet und gegen die durch die Führungsoberfläche definierte Längsrichtung unter einem Klemmwinkel zwischen ungefähr 3 bis 20° geneigt ist, wobei der in der Seitenrichtung zwischen der Führungsoberfläche und der Klemmoberfläche jedes Schuhs gemessene Abstand in der Kopplungslängsrichtung (26) des Schuhs (SG) abnimmt, welche der Entkopplungsrichtung des Schuhs entgegengesetzt ist, wobei die Klemmoberflächen der beiden Schuhe (SG, SD) den gleichen Klemmwinkel besitzen, um sich beim Einsetzen der Vorrichtung in die zentrale Öffnung unter Abstützung der beiden Führungsoberflächen (18) auf den freien Rändern (20) der beiden Halterungslippen (LG, LD) gegeneinander in Anschlag zu bringen; wobei die Kopplungsrichtungen (26, 28) der beiden Schuhe einander entgegengerichtet sind, damit die später auf die Schuhe aufgebrachten, entgegengesetzten Kopplungslängskräfte die beiden Klemmoberflächen aneinander unter Einklemmen jedes Schuhs (SG) zwischen dem Rand (20) der zugehörigen Halterungslippe (LG) und der Klemmoberfläche (14D) des anderen Schuhs gleiten lassen und die Einklemmung die Blockierung der Vorrichtung zwischen den Rändern der beiden Halterungslippen (LG, LD) bewirkt,

– wobei jeder Schuh weiter eine Halterungsschulter (12), die gegenüber der Gleitoberfläche (18) zurückspringt und gegen die hintere Fläche der zugehörigen Halterungslippe (LG) anliegt, sowie eine hintere Anschlagfläche (24) besitzt, die nach hinten gegen die Profilschiene anstößt,

– und wobei mindestens einer der beiden Schuhe weiter als integralen · Bestandteil ein Verankerungsmittel (NG, ND), beispielsweise eine von einem Durchlaß durchdrungene Öse, zum Halten des zu befestigenden Bauteils aufweist.

2. Montagesatz nach Anspruch 1, dadurch gekennzeichnet, daß der Klemmwinkel zwischen 5 und 12° beträgt und die Schuhe aus einem organischen Polymer mit guter mechanischer Widerstandsfähigkeit und gleichzeitig einer gewissen Nachgiebigkeit besteht, beispielsweise aus einem Polyamid.

3. Montagesatz nach Anspruch 1, dadurch gekennzeichnet, daß die Führungsoberfläche, die Halterungsschulter (12) und die hintere Anschlagfläche aus dem Boden (18), bzw. der hinteren Flanke (22) bzw. und der vorderen Flanke (24) einer Gleitnut (16) bestehen, die sich in Längsrichtung in der äußeren Seitenfläche (10, 12) jedes Schuhs (SG) zur Aufnahme der zugehörigen Lippe (LG) erstreckt.

4. Montagesatz nach Anspruch 1, dadurch gekennzeichnet, daß mindestens ein erster Schuh (SG, SD) mindestens einen Sperrvorsprung aufweist, der über die Klemmoberfläche (14, 14D) vorspringt und elastisch zurückziehbar ist und eine wellige Gleitfläche (34) besitzt, die in Kontakt mit der Klemmoberfläche (14D, 14) des zweiten Schuhs (SD, SG) gelangt und in Längsrichtung gegen diese Oberfläche, unter Aufnahme einer ausreichend großen Kraft zum Zurückziehen des Vorsprungs, gleiten kann und so den gegenseitigen Kontakt und das relative Gleiten der beiden Klemmoberflächen aneinander ermöglicht, wobei der zweite Schuh (SD, SG) mit mindestens einer Sperrfläche (38) ausgestattet ist, die gegenüber ihrer Klemmoberfläche (14) zurückweicht und in die Entkopplungsrichtung des zweiten Schuhs weist, um eine Fläche dieses Sperrvorsprungs des ersten Schuhs bei der Blockierung der Vorrichtung in der Profilschiene (4) aufzunehmen, damit dieser Vorsprung und diese Sperrfläche zur Verhinderung einer longitudinalen Entkopplungsbewegung eines Schuhs zusammenwirken.

5. Montagesatz nach Anspruch 4, dadurch gekennzeichnet, daß jeder der beiden Schuhe mindestens einen sogenannten Sperrvorsprung (34) und mindestens eine sogenannte Sperrfläche (38) aufweist.

6. Montagesatz nach Anspruch 5, dadurch gekennzeichnet, daß die Klemmoberfläche (14) jedes Schuhs (SG) Rillen (32) besitzt, die sich in der Tiefenrichtung erstrecken und über die Länge dieser Fläche aufeinander folgen, wobei die Rillen aus einem elastischen Material bestehen und in bezug auf die Klemmoberfläche (14) einerseits Vorsprünge (34), welche die Sperrvorsprünge darstellen, andererseits Vertiefungen (36) bilden, die sich zwischen den Vorsprüngen befinden und größere Querschnitte besitzen als die Vorsprünge, und deren Ränder (38) die Sperrflächen bilden.

7. Montagesatz nach Anspruch 6, dadurch gekennzeichnet, daß die Rillen (32) einen kleineren Teil der Tiefe der Klemmoberfläche (14) besetzen, damit einerseits die Wirksamkeit der Sperrung durch eine geringe relative Drehbewegung der beiden Klemmoberflächen beim gegenseitigen Kontakt nur wenig beeinträchtigt, andererseits die notwendige Klemmkraft bei der Sperrung der beiden Schuhe (SG, SD) in Grenzen bleibt, wobei diese Rillen einen größeren Teil der Länge dieser Oberfläche besetzen, damit die zum Sperren erforderliche longitudinale Kopplungskraft im wesentlichen die gleiche ist bei leicht unterschiedlichen Werten der Breite der Öffnung (6) der Profilschiene.

8. Montagesatz nach Anspruch 4, dadurch gekennzeichnet, daß der zurückziehbare Vorsprung aus einem Sperrhaken (40GB) besteht, der von einer an einen Klemmschuh befestigten Anschlußzone (42B) neben einer Anschlußfläche (44B) eines Körpers dieses Klemmschuhs ausgeht, wobei der Klemmschuh ein Hakenklemmschuh (SGB) ist und die Anschlußfläche vor diesem Schuhkörper liegt, wenn dieser sich in die Kopplungsrichtung (26) bewegt, wobei der Haken von dieser Zone aus in eine Erstreckungsrichtung weist, so daß er diese Anschlußfläche überragt und nach dieser Anschlußzone eine elastische Biegezone (46B) besitzt, die die Form einer Lamelle aufweist, deren Breite parallel zu der Tiefenrichtung (DP) liegt und deren Länge einen Abschnitt der Länge des Ha-kens bildet, wobei die Anschlußzone und mindestens ein Anfangsabschnitt der Biegezone hinter der Klemmoberfläche (14B) des Hakenträgerschuhs (SGB) zurückweicht und nach der Anschlußzone weiter eine Kurvenzone (46B) aufweist, welche sie von der äußeren Seitenfläche (10B, 12B) entfernt und zur Entkopplungsrichtung (28) des Schuhs umlenkt, wobei die Biege- und die Kurvenzone zusammenfallen können, und der Haken nach diesen Biege- und Kurvenzonen eine Kontaktzone (48B) mit der Gleitfläche (50B) aufweist, welche entlang der Klemmoberfläche des anderen Klemmschuhs (SDB) gleitet und ebenfalls eine Anschlagsfläche (52B) aufweist, die an die Sperrfläche (54B) dieses anderen Schuhs anstößt und in die Entkopplungsrichtung (28) des Hakenträgerschuhs weist, wobei die Ruhestellungsform der Biegezone (46B) des Hakens die Gleitfläche (50B) und die Anschlagfläche (52B) über die Klemmoberfläche (14B) des Schuhs vorspringen läßt, wobei weiter ein Zwischenraum zur Aufnahme der gegen die Klemmoberfläche zurückspringenden Kontaktzone vorgesehen ist, wenn ein Anstoßen der Klemmoberfläche des anderen Klemmschuhs (SDB) an dieser Gleitfläche die Biegezone verbiegt, wobei diese Gleitfläche (50B) so angeordnet ist, daß das Abstützen nach dem gegenseitigen Anschluß der beiden Schuhe (56B, SGD) aufhört, damit die Anschlagfläche (52B) dieses Hakens wieder normal über die Klemmoberfläche (14B) des Hakenträgerschuhs hinaus vorspringt und sich so gegen die Sperrfläche (54B) des anderen Schuhs (SDB) zur Schaffung der Sperre anlegt, und damit auch ein auf den Abschnitt (48B) des Hakens, der über die Anschlußfläche (44B) des Körpers des Hakenträgerschuhs vorspringt, ausgeübter Steuerdruck den Haken erneut zum Verbiegen bringt, um die Sperrung zu beseitigen und die beiden Schuhe freizugeben.

9. Montagesatz nach Anspruch 8, dadurch gekennzeichnet, daß jeder der beiden Klemmschuhe (SGB, SDB) einen Sperrhaken (40GB, 40DB) sowie eine Sperrfläche (56B, 54B) besitzt, die mit der Anschlagfläche (52B, 58B) des Hakens des anderen Schuhs zusammenwirken.

10. Montagesatz nach Anspruch 9, dadurch gekennzeichnet, daß die Sperrfläche des anderen Klemmschuhs (SDB) aus der Entkopplungsfläche (54B) des Körpers dieses Schuhs besteht.

11. Montagesatz nach Anspruch 8, dadurch gekennzeichnet, daß der andere Schuh (SDC) mehrere Sperrseiten (60C, 61C, 62C) besitzt, die zahnstangenförmig in der Kopplungsrichtung (28) des Schuhs aufeinanderfolgen und am Boden einer in die Klemmoberfläche des Schuhs nahe bei der Entkopplungsoberfläche (66C) des Schuhs eingearbeiteten Vertiefung gebildet sind, wobei der zur Aufnahme der Kontaktzone (48C) des Hakens (40GC) des Hakenträgerschuhs (56C) vorgesehene Raum durch eine in die Klemmoberfläche (14C) dieses Hakenträgerschuhs in der Nähe und bis zur Kopplungsfläche (44C) des Schuhkörpers reichende Vertiefung (68C) gebildet ist.

12. Befestigungsverfahren auf einer Profilschiene nach Anspruch 1, dadurch gekennzeichnet, daß es die folgenden Schritte aufweist:

– man erfaßt die gemäß Anspruch 1 gekennzeichneten Schuhe (SG, SD), wobei die maximale Breite eines hinteren Abschnitts jedes Schuhs (SG) kleiner als die Breite der Öffnung (6) der Schiene (4) ist und der hintere Abschnitt die Führungsoberfläche (18), die Halterungsschulter (12) und mindestens einen zugehörigen Abschnitt der Klemmoberfläche (14) aufweist,

– man bringt jeden Schuh im wesentlichen in die jeweils longitudinale, seitliche und tiefenorientierte Richtung der Profilschiene, wobei die Kopplungsrichtungen der beiden Schuhe gegeneinander gerichtet werden,

– man führt den hinteren Abschnitt (12, 18) jedes Schuhs (SG) in die Öffnung (6) und den Hohlraum (8) der Schiene ein, wobei jeder Schuh (SG) in Längsrichtung gegenüber dem anderen Schuh entsprechend der Entkopplungsrichtung (28) um einen ausreichenden Abstand verschoben ist, damit die Anwesenheit dieses anderen Schuhs nicht die Einführung behindert,

– man bringt die Führungsoberflächen jedes Schuhs (SG) durch seitliches Verschieben (30) des Schuhs nach innen in Kontakt mit dem Rand (20) der zugehörigen Halterungslippe (LG) und man bringt die Klemmoberflächen (14, 14D) der beiden Schuhe durch Verschiebung mindestens eines von ihnen in der Kopplungsrichtung (26) in gegenseitigem Kontakt,

– und man drückt die beiden Schuhe (SG, SD) in der Kopplungsrichtung (26, 28) derart gegeneinander, daß das Gleiten der Klemmoberfläche (14, 14') des einen Schuhs entlang derjenigen (14D, 14) des anderen Schuhs (SD, SG) eine seitliche Andruckkraft der Gleitfläche (18) des gegen den Rand (20) der zugehörigen Halterungslippe ge-

drückten Schuhs entstehen läßt, wobei das Andrücken solange fortgesetzt wird, bis die seitliche Andruckkraft ausreicht, um durch Reibung die Blockierung der Vorrichtung in Längsrichtung zu gewährleisten.

**Claims**

1. An assembly formed by an elongate retaining member and a device for securing a component (2), such as an electrical connection component, at a longitudinally controllable point on the elongate retaining member (4), this member having a constant cross section extending in a left-right lateral direction, a central opening (6) between a left (LG) and a right (LD) lateral retaining lip whereby a cavity (8) is formed situated behind those lips and that opening and extending in a front-rear depth direction,

this device comprising a left wedge (SG) and a right wedge (LD) retaining lips,

both wedges extending laterally between an external lateral face (10, 12) and an internal lateral face (14), the external lateral face having a guide surface (18) suitable for bearing and sliding longitudinally against the free edge (20) of the corresponding retaining lip (LG), the internal lateral face forming a wedging surface (14) whose depth lies along said depth direction and whose length is perpendicular to that depth, the wedging surface being inclined relative to the longitudinal direction defined by said guide surface by a wedge angle lying in the range 3° to 20°, the separation between the guide surface and the wedging surface of each wedge as measured in said lateral direction decreasing in a longitudinal engaging direction (26) of the wedge (SG), this direction being opposite to a disengaging direction of that wedge, the wedging surfaces of the two wedges (SG, SD) having the same wedge angle so as to bear against each other when the device is inserted into said central opening with the two guide surfaces (18) bearing against the free edges (20) of the two retaining lips (LG, LD), the two wedges engaging in opposite directions (26, 28) so that the longitudinal opposed engagement forces applied to the two wedges cause the two wedging surfaces to slide over one another so as to wedge each wedge (SG) between the edge (20) of the corresponding retaining lip (LG) and the wedging surface (14D) of the other wedge and so that this wedging ensures that the device is locked between the edges of the two retaining lips (LG, LD),

both wedges also having a retaining shoulder (12) which protrudes beyond the rear of said guide surface (18) so as to bear against the rear face of the corresponding retaining lip (LG), and a rear bearing surface (24) which bears rearwardly against the elongate retaining member,

at least one of these two wedges also comprising integral support means (NG, ND), such as a lug pierced by a passage, for carrying said component to be secured.

2. An assembly according to claim 1, characterized in that said wedge angle lies in the range 5° to 12°, said wedges being constituted by an organic polymer having both good mechanical strength and a certain flexibility, such as a polyamide, for example.

3. An assembly according to claim 1, characterized in that said guide surface, said retaining shoulder (12) and a said rear bearing surface are constituted by the bottom (18), the rear flank (22) and the front flank (24) respectively of a slide groove (16) which extends longitudinally in the external lateral face (10, 12) of each wedge (SG) and receives the corresponding retaining lip (LG).

4. An assembly according to claim 1, characterized in that at least a first said wedge (SG, SD) comprises at least one stop shoulder forming a protrusion on said wedging surface (14, 14D), said protrusion being resiliently retractable and having a sliding summit face (34) suitable for contacting the wedging surface (14D, 14) of the other wedge (SD, SG) and for sliding longitudinally against that surface whilst receiving a force sufficient to ensure retraction of the protrusion and to thereby allow contact and mutual sliding of the two wedging surface, the second wedge (SD, SG) having at least one stop-face (38) recessed from said wedging surface (14) and facing said second wedge, this stop-face receiving a face of the stop-shoulder of the first wedge when the device is locked in the elongate retaining member (14), so that the stop-shoulder and the stop-face cooperate to prevent a longitudinal disengaging displacement of a wedge.

5. An assembly according to claim 4, characterized in that both of the two said wedges include at least one said stop-shoulder (34) and at least one said stop-face (38).

6. An assembly according to claim 5, characterized in that said wedging surface (14) of each said wedge (SG) has ribs (32) which extend in said depth direction and which are arranged successively along the length of said surface, these ribs being constituted by a resilient material and forming with respect to said wedging surface (14) both peaks (34) which constitute said stop-shoulders and troughs (36) which are situated between those peaks and whose cross-section is greater than that of the peaks and whose edges (38) constitute said stop-faces.

7. An assembly according to claim 6, characterized in that said ribs (32) occupy a minor fraction of the depth of the wedging surface (14), so that the efficiency of the said stopping is scarcely affected by a small relative rotation of the two mutually contacting wedging surfaces, and so as to limit the force required to wedge and stop the two wedges (SG, SD), these ribs occupying a major fraction of the length of that surface so that the longitudinal engagement force required for stopping is substantially the same despite small differences in the width of the opening (6) in the elongate retaining member (4).

8. An assembly according to claim 4, characterized in that said retractable peak is constituted by a pawl (40GB) which begins at an attachment zone (42B) secured to one of said wedges, called the pawl-carrying wedge (SGB), adjacent an engagement face (44B) of a body of that pawl-carrying wedge, this face being that which is at the front of that wedge body when the wedge is displaced in said engagement direction (26), the pawl leaving said zone in a direction so as to protrude beyond said egagement face, the pawl having, after said attachment zone, a resilient flexure zone (46B) in the shape of a blade whose width is parallel to said depth direction (DP) and whose length constitutes part of said pawl, said attachment zone and at least an initial part of said flexure zone being recessed below said wedging surface (14B) of the pawl-carrying wedge (SGB), this pawl also having, after the attachment zone, a curved zone (46B) which curves the pawl away from said external lateral face (10B, 12B) and turns it back towards said wedge disengagement direction (28) of that wedge, said flexure and curved zones merging if desired, the pawl including, after these flexure and curved zones, a contact zone (48B) comprising said sliding face (50B) which is suitable for sliding against the wedging surface of the other wedge (SDB) and also comprising a bearing face (52B) suitable for bearing against said stop-face (54B) of that other wedge, said bearing face facing in the disengagement direction (28) of the pawl-carrying wedge, the rest shape of the flexure zone (46B) of the pawl being such as to cause said sliding (50B) and bearing (52B) surfaces to project from the wedging surface (14B) of the wedge, a recessed space being provided in said wedging surface to receive said contact zone when the wedging surface of the other wedge (SDB) bearing against this sliding face causes the flexure zone to flex, this sliding face (50B) being arranged so that this bearing action ceases after the two wedges (SGB, SDB) are mutually engaged so that said bearing face (52B) of the pawl returns naturally to protrude beyond the wedging surface (14B) of the pawl-carrying wedge and to bear against the stop-face (54B) of the other wedge (SDB) to cause stopping, and so that additionally a control pressure exerted on that part (48B) of the pawl which protrudes beyond said engagement face (44B) of the body of the pawl-carrying wedge causes the pawl to flex again to suppress the stopping action and to allow the two wedges to be disengaged.

9. An assembly according to claim 8, characterized in that both wedges (SGB, SDB) carry a said pawl (40GB, 40DB) and a stop-face (56B, 54B) suitable for cooperating with the bearing face (52B, 58B) of the pawl of the other wedge.

10. An assembly according to claim 9, characterized in that said stop-face of said other wedge (SDB) is constituted by the disengagement face (54B) of the body of that wedge.

11. An assembly according to claim 8, characterized in that said other wedge (SDC) comprises a plurality of said stop-faces (60C, 61C, 62C) which are arranged successively like a rack along the engagement direction (28) of that wedge and which are formed at the bottom of a recess (64C) hollowed in the wedging surface of that wedge adjacent the disengagement face (66C) of that wedge, said space which is provided for receiving the contact zone (48C) of the pawl (40GC) of the pawl-carrying wedge (SGC) being formed by a recess (68C) hollowed in the wedging surface (14C) of the pawl-carrying wedge adjacent and up to said engagement face (44C) of the body of that wedge.

12. A method for securing a device onto an elongate retaining member (4) according to claim 1, this method being characterized in that it comprises the following steps:

wedges (SG, SD) according to claim 1 are procured, the maximum width at a rear part of each said wedge (SG) being less than the width of said opening (6) in the elongate retaining member (4), this rear part comprising said guide surface (18), said retaining shoulder (12) and at least a corresponding part of said wedging surface (14),

each wedge is oriented substantially along said longitudinal, lateral and depth directions of the elongate retaining member, the engagement directions of the two wedges being opposed,

the rear part (12, 18) of each wedge (SG) is introduced into said opening (6) and said cavity (8) in the elongate member, each wedge (SG) being displaced longitudinally from the other (SD) in said disengagement direction (28) by a distance sufficient that the introduction of one wedge is not impeded by the presence of the other,

the guide surface of each wedge (SG) is brought into contact with the edge (20) of the corresponding retaining lip (LG) by displacing the wedge laterally inwards (30) and the wedging surfaces (14, 14D) of the wedges are brought into mutual contact by displacing at least one of them in said engagement direction (26),

each of the two wedges (SG, SD) is pushed in said engagement direction (26, 28) so that sliding of its wedging surface (14, 14D) against that (14D, 14) of the other wedge (SD, SG) causes the sliding surface (18) of the pushed wedge (SG) to bear against the edge (20) of the corresponding retaining lip (LG) with a lateral force, this pushing being continued until this lateral bearing force is sufficient to ensure that the device is locked longitudinally by friction.

FIG.1

FIG. 2

FIG.3

FIG.4

# FIG.5

# FIG.6

FIG.7

FIG.8

FIG.9

FIG.10